# EUROPÄISCHE PATENTANMELDUNG

(11) **EP 1 653 135 A2**
(43) Veröffentlichungstag der Anmeldung: **03.05.2006**
(21) Anmeldenummer: 05018005.8
(22) Anmeldetag: 19.08.2005
(51) Int. Cl.: F16K 47/06, F16N 27/00

(54) **Vorrichtung zum kontinuierlichen Verändern der Durchflussmenge eines Mediums**

(30) Priorität: 30.10.2004 DE 202004016833 U
(71) Anmelder: Lincoln GmbH & Co. KG, 69183 Walldorf (DE)
(72) Erfinder: Paluncic, Zdravko, Dr.-Ing., 67067 Ludwigshafen (DE); Schönfeld, Andreas, 68789 St. Leon-Rot (DE); Hack, Jürgen, 69207 Sandhausen (DE)
(74) Vertreter: KEIL & SCHAAFHAUSEN Patentanwälte

(57) **Zusammenfassung**

Die Erfindung bezieht sich auf eine Vorrichtung zum kontinuierlichen Verändern der Durchflussmenge eines viskosen Mediums, z.B. hydraulischer Öle oder Schmierfette, mit a) einem z.B. konischen Drosseleinsatz (1), welcher eine glatte Oberfläche aufweist und in einer konischen Bohrung (3) eines Gehäuses (4) derart axial verstellbar ist, dass unterschiedliche Spaltbreiten und/oder - längen zwischen Drosseleinsatz (1) und Gehäuse (4) einen Gehäuseeinlass (5) mit einem Gehäuseauslass (6) für das Medium verbinden, oder b) einem kreiszylindrischen Drosseleinsatz (1), welcher auf seinem Umfang eine wendelförmig umlaufende Nut (2) aufweist und in einer kreiszylindrischen Bohrung (3) eines Gehäuses (4) axial derart axial verstellbar ist, dass unterschiedliche Längen der umlaufenden Nut (2) einen Gehäuseeinlass (5) mit einem Gehäuseauslass (6) für das zu dosierende Medium verbinden.

## Beschreibung

Die Erfindung bezieht sich auf eine Vorrichtung zum kontinuierlichen Verändern der Durchflussmenge eines viskosen Mediums, z.B. hydraulischer Öle oder Schmierfette.

Aus der DD 269 418 A1 ist eine Vorrichtung zur Dosierung geringer Ölmengen mittels Spindelpumpe bekannt, wobei in einem ölgefüllten Gehäuse das ÖI durch eine wendelförmige Ölfördernut über einen Spalt der Schmierstelle zugeführt wird. Dabei sind mindestens zwei wendelförmige Ölfördernuten in einem bestimmten Abstand auf einer Welle angeordnet, wobei zwischen den Ölfördernuten eine durch Spindel bedienbare Schiebehülse mit Ringnut angeordnet ist, welche Anschlüsse für bewegliche Leitungen aufweist. Die Spindel fördert das Öl durch den Lagerspalt zwischen Welle und Schiebehülse . Durch die Veränderung des Abstandes zwischen dem Auslauf der Ölfördernut und der Ringnut verändert sich die Länge der Drosselstrecke. Je länger die Drosselstrecke ist, umso höher ist der Gegendruck und umso geringer die Förderleistung. Das nicht absetzbare ÖI wird von dem Spalt nicht aufgenommen und bleibt im Gehäuse zurück. Eine solche Vorrichtung ist verhältnismäßig komplex in ihrem Aufbau und damit kostenungünstig in der Herstellung, Bedienung und der Wartung.

Aufgabe der vorliegenden Erfindung ist es, eine Vorrichtung zum kontinuierlichen Verändern der Durchflussmenge eines viskosen Mediums, z.B. hydraulischer Öle oder Schmierfette einfacheren Aufbaus und zuverlässiger Bedienung vorzuschlagen.

Diese Aufgabe wird bei einer Vorrichtung zum kontinuierlichen Verändern der Durchflussmenge eines viskosen Mediums, z.B. hydraulischer Öle oder Schmierfette mit einem konischen Drosseleinsatz gelöst, welcher eine glatte Oberfläche aufweist und in einer z.B. konischen Bohrung eines Gehäuses derart axial verstellbar ist, dass unterschiedliche Spaltbreiten und/oder -längen zwischen Drosseleinsatz und Gehäuse einen Gehäuseeinlass mit einem Gehäuseauslass für das Medium verbinden, oder mit einem kreiszylindrischen Drosseleinsatz, welcher auf seinem Umfang eine wendelförmig umlaufende Nut aufweist und in einer kreiszylindrischen Bohrung eines Gehäuses derart axial verstellbar ist, dass unterschiedliche Längen der umlaufenden Nut einen Gehäuseeinlass mit einem Gehäuseauslass für das zu dosierende Medium verbinden.

Eine solche Dosiervorrichtung ist von einfachem Aufbau und zuverlässiger Funktion.

In Weiterbildung des Erfindungsgedankens hat die umlaufende Nut einen sich über ihre Länge verändernden Querschnitt, vorzugsweise eine sich über ihre Länge verändernde Tiefe, so dass nur eine vergleichsweise geringe axiale Verschiebung des Dosiereinsatzes zur gewünschten Änderung der Durchflussmenge erforderlich ist.

Dabei nimmt der Querschnitt der umlaufenden Nut vorzugsweise von der Einlassseite zur Auslassseite hin, insbesondere kontinuierlich, ab.

Ein weiterer Erfindungsgedanke besteht darin, dass der Einlass in eine Kammer des Gehäuses stirnseitig vor dem Drosseleinsatz mündet. Auf diese Weise wird nach einer Freigabe des Drosseleinsatzes dieser von dem einlassseitigen Druck des viskosen Mediums in seine neue Betriebsposition mit neuem Durchflusswiderstand verschoben. Hierbei kann jedoch auch ein zusätzliches Federelement hilfreich sein.

Der Gehäuseauslass zweigt vorzugsweise von dem kreiszylindrischen Umfang der Bohrung aus ab.

Für eine einfache Bedienung ist es von Vorteil, wenn der Drosseleinsatz mit Hilfe einer Drosselschraube kontinuierlich axial verstellbar ist.

Zur Dosiergenauigkeit trägt es weiterhin bei, wenn gemäß einem weiteren fakultativen Erfindungsmerkmal der Drosseleinsatz an dem dem Gehäuseeinlass gegenüber liegenden Ende gegen die kreiszylindrische Wandung, z.B. mittels eines O-Ringes, welcher vorzugsweise von dem Drosseleinsatz getragen wird, abgedichtet ist.

Zur Sicherung einer vorgewählten Durchflussmenge kann weiterhin die Drosselschraube in ihrer Betriebsstellung arretierbar sein.

Weil die Steigung der Nutwendel und der Querschnitt der umlaufenden Nut die Kennlinie der Drosseleinrichtung bestimmen, ist es besonders vorteilhaft, wenn der Drosseleinsatz, gegen einen anderen Drosseleinsatz mit anderer Drosselkennlinie, austauschbar in dem Gehäuse aufgenommen ist.

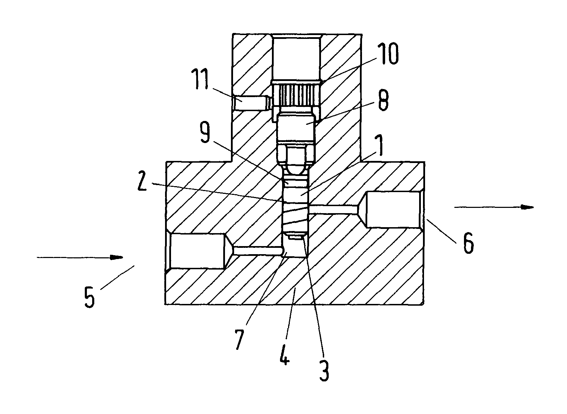

Weitere Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger Kombination den Gegenstand der Erfindung, auch unabhängig von deren Zusammenfassung in einzelnen Ansprüchen und deren Rückbeziehung.

Die einzige Figur veranschaulicht eine die Erfindung aufweisende Drosseleinrichtung nach einem Ausführungsbeispiel mit wendelförmig umlaufender Nut des Drosseleinsatzes.

Die dort dargestellte Drosseleinrichtung weist ein Gehäuse 4 auf, in welches eine als Sackloch ausgebildete kreiszylindrische Bohrung 3 eingebracht ist. In dem (in der Zeichnung) unteren Teil der Bohrung 3 ist ein kreiszylindrischer Drosseleinsatz 1 mit möglichst geringem Spiel axial verschieblich aufgenommen. Der Drosseleinsatz 1 trägt auf seinem zylindrischen Umfang eine wendelförmig umlaufende Nut 2.

Stirnseitig unterhalb des Drosseleinsatzes 2 befindet sich in dem Gehäuse 4 eine Kammer 7, in welche ein Gehäuseeinlass 5 für das Medium mündet. Von dem Bereich der Bohrung 3, in welchem sich der Drosseleinsatz 1 axial hin und her bewegen kann, zweigt ein Gehäuseauslass 6 für das Medium ab.

Aufgrund der axialen Verschiebung des Drosseleinsatzes 1 in der Bohrung 3 sind Gehäuseeinlass 5 und Gehäuseauslass 6 über eine mehr oder weniger lange Strecke der wendelförmig umlaufenden Nut 2 miteinander verbunden. Dementsprechend ist der Durchflusswiderstand mehr oder weniger groß. Die wendelförmige Nut 2 kann bspw. vom eingangsseitigen Ende zum ausgangsseitigen Ende hin einen kontinuierlich zunehmenden Querschnitt, insbesondere eine kontinuierlich zunehmende Tiefe haben. Durch die Steigung der wendelförmigen Nut und durch deren Querschnitt wird die Drosselkennlinie der Vorrichtung bestimmt.

Die axiale Verschiebung des Dossiereinsatzes 1 in der Bohrung 3 kann mit Hilfe einer Dosierschraube 8 bewerkstelligt werden, welche in einem erweiterten Gewindeabschnitt der Bohrung 3 aufgenommen ist. Die Lage der Drosselschraube 3 kann mit Hilfe eines Sicherungsringes 10 und/oder einem Druckstück 11 fixiert werden.

Wird die Drosselschraube 8 derart (in der Zeichnung) nach oben verstellt, sodass sich der Dosiereinsatz 1 axial (in der Zeichnung) nach oben verschieben kann, wird dieses Nachschieben bei der nächsten Druckbeaufschlagung des Gehäuseeinlasses 5 durch das Medium selbst bewerkstelligt, bis der Dosiereinsatz 1 wieder an der Dosierschraube 8 anschlägt.

Der Dosiereinsatz 1 ist mittels eines in seinem oberen Ende vorgesehenen O-Ringes 9 gegen die Innenwandfläche der Bohrung 3 abgedichtet, so dass das Medium nicht (in der Zeichnung) nach oben austreten kann.

Entsprechend funktioniert auch eine Vorrichtung, bei welcher der Drosseleinsatz 1 keine umlaufende Nut sondern eine glatte (d.h. wendelnutfreie) aber insbesondere konische Oberfläche aufweist, wobei sich der Konus von (in der Zeichnung) oben nach unten leicht verjüngt und in einer ebenfalls konischen Bohrung des Gehäuses 4 axial verstellbar ist. Bei einer solchen axialen Verstellung ergeben sich nicht unterschiedlich lange wirksame Nutabschnitte, sondern zu Dosierzwecken unterschiedlich breite und/oder lange Spalten zwischen Drosseleinsatz 1 und Gehäuse 4.

### Bezugszeichenliste

- 1: Drosseleinsatz
- 2: Nut
- 3: Bohrung
- 4: Gehäuse
- 5: Gehäuseeinlass
- 6: Gehäuseauslass
- 7: Kammer
- 8: Drosselschraube
- 9: O-Ring
- 10: Sicherungsring
- 11: Druckstück

## Patentansprüche

1. Vorrichtung zum kontinuierlichen Verändern der Durchflussmenge eines viskosen Mediums, z.B. hydraulischer Öle oder Schmierfette, mit a) einem z.B. konischen Drosseleinsatz (1), welcher eine glatte Oberfläche aufweist und in einer konischen Bohrung (3) eines Gehäuses (4) derart axial verstellbar ist, dass unterschiedliche Spaltbreiten und/oder - längen zwischen Drosseleinsatz (1) und Gehäuse (4) einen Gehäuseeinlass (5) mit einem Gehäuseauslass (6) für das Medium verbinden, oder b) einem kreiszylindrischen Drosseleinsatz (1), welcher auf seinem Umfang eine wendelförmig umlaufende Nut (2) aufweist und in einer kreiszylindrischen Bohrung (3) eines Gehäuses (4) axial derart axial verstellbar ist, dass unterschiedliche Längen der umlaufenden Nut (2) einen Gehäuseeinlass (5) mit einem Gehäuseauslass (6) für das zu dosierende Medium verbinden.

2. Vorrichtung nach Anspruch 1, **dadurch gekennzeichnet, dass** die umlaufende Nut (2) einen sich über ihre Länge veränderten Querschnitt, vorzugsweise eine sich über ihre Länge verändernde Tiefe, aufweist.

3. Vorrichtung nach Anspruch 2, **dadurch gekennzeichnet, dass** der Querschnitt der umlaufenden Nut (2) von der Einlassseite zur Auslassseite hin, vorzugsweise kontinuierlich, abnimmt.

4. Vorrichtung nach einem der vorhergehenden Ansprüche, **dadurch gekennzeichnet, dass** der Gehäuseeinlass (5) in eine Kammer (7) des Gehäuses (4) stirnseitig vor dem Drosseleinsatz (1) mündet.

5. Vorrichtung nach einem der vorhergehenden Ansprüche, **dadurch gekennzeichnet, dass** der Gehäuseauslass (6) von dem kreiszylindrischen Umfang der Bohrung (3) aus abzweigt.

6. Vorrichtung nach einem der vorhergehenden Ansprüche, **dadurch gekennzeichnet, dass** der Drosseleinsatz (1) mit Hilfe einer Drosselschraube (8) kontinuierlich axial verstellbar ist.

7. Vorrichtung nach einem der vorhergehenden Ansprüche, **dadurch gekennzeichnet, dass** der Drosseleinsatz (1) an dem dem Gehäuseeinlass (5) gegenüber liegenden Ende gegen die kreiszylindrische Wandung der Bohrung (3), z.B. mittels eines O-Ringes (9), abgedichtet ist.

8. Vorrichtung nach Anspruch 6 oder 7, **dadurch gekennzeichnet, dass** die Drosselschraube (8) in ihrer Betriebsstellung arretierbar ist.

9. Vorrichtung nach einem der vorhergehenden Ansprüche, **dadurch gekennzeichnet, dass** der Drosseleinsatz (1) austauschbar in dem Gehäuse (4) aufgenommen ist.
